**Europäisches Patentamt**

**European Patent Office**

**Office européen des brevets**

(19)

(11) Numéro de publication: **0 274 300
B1**

(12) # FASCICULE DE BREVET EUROPEEN

(45) Date de publication du fascicule du brevet:
12.09.90

(51) Int. Cl.⁵: **G01H 17/00**

(21) Numéro de dépôt: **87402720.4**

(22) Date de dépôt: **01.12.87**

(54) Procédé et appareil pour l'évaluation du pouvoir émissif sonore de pièces creuses et leur application notamment à l'industrie automobile.

(30) Priorité: **11.12.86 FR 8617370**

(43) Date de publication de la demande:
**13.07.88 Bulletin 88/28**

(45) Mention de la délivrance du brevet:
**12.09.90 Bulletin 90/37**

(84) Etats contractants désignés:
**DE ES GB IT SE**

(56) Documents cités:
**TECHNISCHES MESSEN ATM,
vol. 45, no. 4, avril 1978, pages 141-146; H. HARTWIG et al.: "Akustische Messverfahren in der Automobilentwicklung"**

(73) Titulaire: **ECIA - EQUIPEMENTS ET COMPOSANTS POUR L'INDUSTRIE AUTOMOBILE, F-25400 Audincourt (Doubs)(FR)**

(72) Inventeur: **Vera, Jean-Claude, 8, rue de la Libération, F-25700 Valentigney(FR)**

(74) Mandataire: **Mestre, Jean et al, c/o CABINET LAVOIX 2, place d'Estienne d'Orves, F-75441 Paris Cédex 09(FR)**

## Description

L'invention est relative aux émissions d'ondes acoustiques et, plus particulièrement, concerne l'appréciation du pouvoir émissif acoustique de pièces creuses.

L'invention a pour objets un procédé pour l'évaluation du pouvoir émissif acoustique de pièces creuses, un appareil notamment pour la mise en oeuvre de ce procédé et l'application de ce procédé et/ou de cet appareil à l'appréciation du pouvoir émissif de pièces creuses par exemple utilisées dans l'industrie automobile.

Dans de nombreux secteurs de l'industrie se pose le problème des émissions sonores résultant entre autres de la circulation d'un fluide, notamment gazeux dans des canalisations. C'est notamment le cas dans l'industrie automobile. Comme on le sait, une automobile est équipée d'un système d'admission qui comprent essentiellement des canalisations, filtres à air, répartiteurs où circule de l'air. Ce système d'admission va de l'embouchure de prélèvement de l'air extérieur jusqu' au point où cet air est mélangé au carburant qui formera avec cet air le mélange explosif utilisé pour faire fonctionner le moteur.

Une telle ligne capte de l'air extérieur qui est aspiré par le moteur. Cette circulation d'un fluide gazeux dans des canalisations crée des systèmes d'ondes qui exercent des pressions fluctuantes sur les parois des conduites qui présentent une certaine élasticité; ces parois ont tendance à se déformer et ainsi à vibrer. Cette transformation de l'énergie cinétique du gaz en vibrations des parois est génératrice d'ondes sonores qui se dissipent dans le milieu environnant notamment à l'extérieur du véhicule.

Le niveau sonore et la fréquence du bruit varient avec le régime du moteur; en effet, le régime du moteur fixe le débit et la vitesse de l'air admis donc le système d'ondes acoustiques établie dans la ligne d'admission compte tenu de l'impédance acoustique de cette dernière et ce système, au rythme de son évolution, excite les fréquences de résonance propres aux constituants de cette ligne.

On comprend immédiatement qu'une telle émission sonore est particulièrement gênante tout d'abord pour le confort des passagers du véhicule et aussi pour les personnes qui se trouvent à l'extérieur de ce dernier. Ces bruits s'ajoutent aux bruits du moteur et au chuintement aérodynamique de l'air sur la carrosserie du véhicule lorsque ce dernier est en déplacement.

Selon des normes ISO adoptées internationalement, les mesures acoustiques sont faites le plus souvent à l'aide de filtres tiers d'octave articulés autour de la fréquence de référence 1kHz avec une progression géométrique de raison $\sqrt[3]{2}$ pour garantir des résultats reproductibles quelle que soit l'origine du filtre utilisé.

Pour pouvoir apprécier l'effet subjectif d'un son sur l'oreille humaine il faut non seulement prendre en compte sa fréquence mais aussi la pression acoustique qu'il exerce. C'est ainsi que pour chaque fréquence utilisée il faut modifier le niveau de la pression acoustique de ce son particulier si l'on veut qu'il soit perçu pour toutes les fréquences avec la même force qu'à la fréquence de référence de 1kHz.

Afin de tenir compte de ce phénomène physiologique, on construit des filtres acoustiques dont le circuit électronique a une sensibilité qui varie avec la fréquence d'une manière analogue à l'oreille humaine. Suivant les niveaux, on utilise trois pondérations différentes désignées classiquement par A, B, C, reconnues internationalement, et spécialement la pondération A la plus utilisée aux faibles niveaux de pression acoustique car donnant une très bonne approximation de la courbe d'égale perception.

Faire de telles mesures sur un véhicule terminé, que ce soit au banc en atelier, par exemple en chambre sourde, ou sur route en circulation, en ambiance réelle, est long et délicat notamment parce qu'il est particulièrement difficile d'identifier et d'isoler la contribution de chaque source sonore parmi toutes celles qui génèrent le bruit d'ensemble.

Devant un tel problème, on comprend qu'il est d'une grande importance pratique de faire en sorte que, dès leur conception, les diverses pièces et éléments qui constituent par exemple une conduite d'admission tels que par exemple les filtres à air, les répartiteurs, les pipes d'admission, présentent une configuration et une structure qui les rendent, le plus possible, inaptes à se déformer élastiquement sous la circulation de l'air qu'ils véhiculent afin, qu'autant faire se peut, ils ne soient pas des sources sonores.

Il faut donc pouvoir disposer d'une technique simple et rapide qui permette de simuler le comportement acoustique des pièces et d'établir un classement de celles-ci qui s'apparente à celui obtenu par les processus normalisés, que l'on vient de rappeler, sans en avoir la lourdeur.

L'invention a essentiellement pour but la mise au point d'une technique qui permet d'étudier et donc d'améliorer le comportement de parois déformables élastiquement d'enveloppes, notamment de composants utilisés pour des lignes d'admission de véhicules par exemple automobiles.

Grâce à l'invention, on peut mettre en évidence la corrélation qui existe entre la mesure de la déformation des parois et leur pouvoir émissif acoustique mesuré par les techniques normalisées d'analyse spectrale au tiers d'octave avec pondération A.

L'invention a pour objet un procédé pour l'évaluation du pouvoir émissif acoustique de pièces creuses dont l'enveloppe délimite une cavité débouchant sur l'extérieur par au moins un orifice. Ce procédé est caractérisé en ce qu'on rend étanche s'il y a lieu la pièce creuse, on relie cet orifice de la pièce creuse à une source de fluide, par exemple de l'air, on immerge la pièce ainsi reliée dans un volume déterminé d'un liquide incompréssible, par exemple de l'eau, on emplit la cavité de la pièce creuse de ce fluide, on met sous pression le fluide dans la cavité, on fait varier cette pression et on mesure la variation du volume du liquide résultant des déformations de l'enveloppe de la pièce engendrées par chaque pression établie du fluide y régnant.

L'invention a aussi pour objet un appareil notamment pour la mise en oeuvre du procédé que l'on vient d'indiquer, pour l'évaluation du pouvoir émissif acoustique de pièces creuses dont l'enveloppe délimite une cavité débouchant sur l'extérieur par au moins un orifice. Cet appareil est caractérisé en ce qu'il comprend une cuve pratiquement indéformable et de volume déterminé étanche au liquide, une alimentation en fluide sous pression équipée d'un raccord adapté pour être relié à l'orifice de la pièce creuse débouchant dans sa cavité, une distribution de liquide pour emplir et vider la cuve et un capteur de variation du volume du liquide dans la cuve résultant des déforma tions de l'enveloppe de la pièce engendrées par la pression établie du fluide y régnant.

L'invention porte aussi sur l'application de ce procédé et/ou de cet appareil à l'évaluation du pouvoir émissif acoustique de pièces de l'industrie automobile notamment de composants de ligne d'admission.

D'autres caractéristiques de l'invention apparaîtront à la lecture de la description et des revendications qui suivent et à l'examen du dessin annexé, donné seulement à titre d'exemple, où:

- la Fig.1 est une vue schématique d'un mode de réalisation d'un appareil selon l'invention ;
- la Fig.2 est un graphique illustrant les résultats des mesures faites avec l'appareil de la Fig.1, conformément au procédé selon l'invention pour deux pièces identiques réalisées en des matériaux différents ; et
- la Fig.3 est un graphique illustrant les réponses acoustiques de ces deux mêmes pièces obtenues selon les techniques normalisées avec filtres au tiers d'octave et pondération A.

La mesure du pouvoir émissif acoustique de pièces ou d'objets qui sont soumis à des vibrations se fait selon des normes bien définies adoptées internationalement. C'est pourquoi on n'exposera pas par le menu tout ce qui concerne les détails pratiques de ce type de mesure et on limitera la description à ce qui est spécifique des caractéristiques de celle-ci.

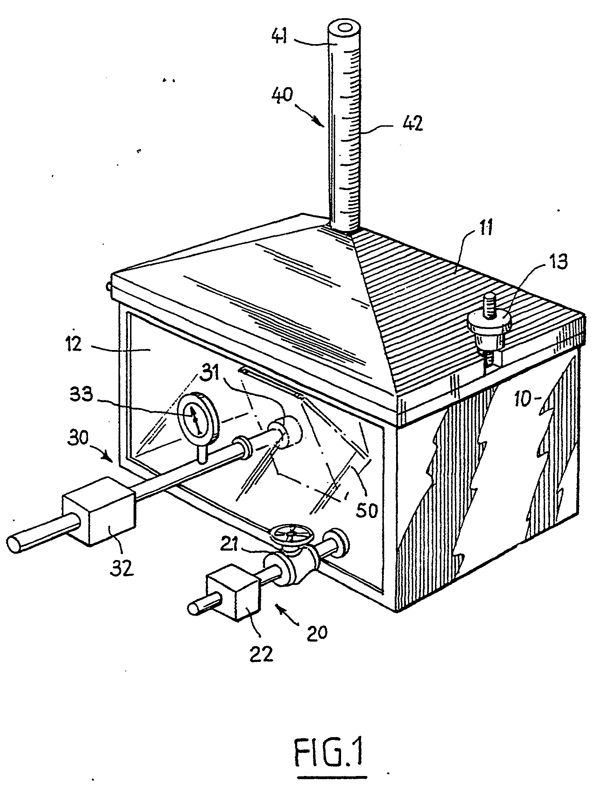

On se reportera maintenant à la Fig.1 où est illustré schématiquement un mode de réalisation d'un appareil selon l'invention.

L'appareil comprend une cuve 10 pratiquement indéformable d'un volume bien déterminé sur laquelle est placé un couvercle 11, lui aussi pratiquement indéformable, qui s'y adapte d'une manière étanche. De préférence, cette cuve se présente sous la forme d'un parallélépipède ou d'un cylindre dont au moins une 12 des faces latérales est transparente, par exemple en verre. Pour des raisons que l'on comprendra par la suite, les parois, tant celles de la cuve que celles du couvercle, sont suffisamment épaisses pour que l'on puisse considérer leurs déformations éventuelles comme du second ordre par rapport au phénomène à mettre en évidence.

L'étanchéité entre cuve et couvercle est obtenue de toute manière appropriée classique, à l'aide de portées et de joints, et la fixation est, elle, assurée par exemple à l'aide de vis, comme représenté en 13.

Dans cette cuve débouche une distribution 20 de liquide qui permet d'emplir et de vider la cuve 10.

Cette distribution est équipée d'un robinet 21 qui permet d'isoler le volume de liquide qui a été introduit dans la cuve. On utilise de préférence comme liquide de l'eau.

Dans cette cuve arrive aussi une alimentation 30 en fluide sous pression qui traverse l'une des parois et dont l'embout situé dans la cuve est équipé d'un raccord 31 pour les besoins que l'on comprendra par la suite. Cette alimentation en fluide, par exemple de l'air, est équipée d'un régulateur de pression 32 à débit variable qui permet de faire varier l'importance de la pression, mesurée à l'aide d'un manometre 33, mais d'une manière lente.

Sur le sommet de la cuve 10 est placé le couvercle 11 qui ferme de manière étanche la partie supérieure de la cuve. De préférence, ce couvercle est de forme pyramidale ou conique. Sa configuration est choisie de manière à éviter la formation de poche d'air pour les raisons que l'on exposera par la suite. Au sommet du couvercle est disposé un capteur 40 de volume ou pression, tel que par exemple un manomètre à eau constitué d'un tube transparent 41 dont une partie porte une graduation 42. Ce tube est par exemple un tube en verre gradué en mm.

· Le raccord 31 situé sur l'alimentation 30 en fluide est par exemple du type "rapide". Il est destiné à s'adapter à un orifice d'une pièce creuse 50 à étudier.

La mise en oeuvre de l'appareil selon l'invention est le suivant.

La pièce creuse 50 à étudier, par exemple une tubulure d'admission, est préalablement rendue étanche de manière à laisser libre un orifice qui débouche dans sa cavité. Cet orifice est relié au raccord 31 de l'alimentation 30 en fluide. Ensuite, on place le couvercle 11 sur la cuve 10 et on l'y adapte d'une manière hermétique. On ouvre alors la distribution 20 de liquide pour l'emplir du liquide, par exemple de l'eau.

On fait en sorte de bien dégazer l'eau introduite dans la cuve. Pour ce faire on laisse l'installation reposer pendant une durée suffisante ou bien on fait appel à des techniques de dégazage par exemple par chauffage ou par ultrasons comme schématisé en 22. On comprend donc l'importance de la géométrie de la cuve. Avec la configuration adoptée, on voit que tout l'air dissout dans le liquide peut se diriger vers le sommet de l'appareil et s'éliminer par le tube 41 du capteur dont l'extrémité libre est ouverte.

Lorsqu'on estime que le liquide est suffisamment dégazé, on peut procéder aux mesures.

On agit sur l'alimentation 30 en fluide sous pression pour mettre la pièce étudiée en pression par paliers successifs à l'aide du régulateur de pression 32. La pression qui règne dans la cavité de la pièce creuse 50 engendre des déformations des parois de son enveloppe qui se traduisent par une variation du volume de la pièce. Comme on l'a indiqué, on utilise un liquide incompressible contenu dans une cuve que l'on considère comme indéformable. Les variations du volume de la pièce étudiée font que le volume du liquide contenu dans la cuve change et ce changement se traduit par une modification du niveau dans le tube gradué que l'on peut ainsi mesurer. En effet, la variation du volume de la pièce est égale à la variation de la hauteur de la dénivellation multipliée par la section du tube. Le choix de la section du tube permet d'obtenir la précision de mesure recherchée.

Si besoin est, l'ensemble de l'appareil est placé dans une enceinte thermostatée et le liquide et le fluide sont régulés en température afin de s'affranchir des erreurs résultant des fluctuations thermiques.

On observera que les mesures ainsi faites peuvent l'être d'une manière statique, comme indiqué, ou d'une manière dynamique. Pour faire des mesures dynamiques il suffit de dégager un autre orifice de la pièce et de le relier, à l'aide d'un raccord approprié à une conduite d'évacuation vers l'extérieur traversant la cuve; on peut de la sorte alors mesurer les déformations résultant de l'insufflation permanente du gaz dans la pièce pour une pression déterminée dont la valeur est fonction de celle du débit.

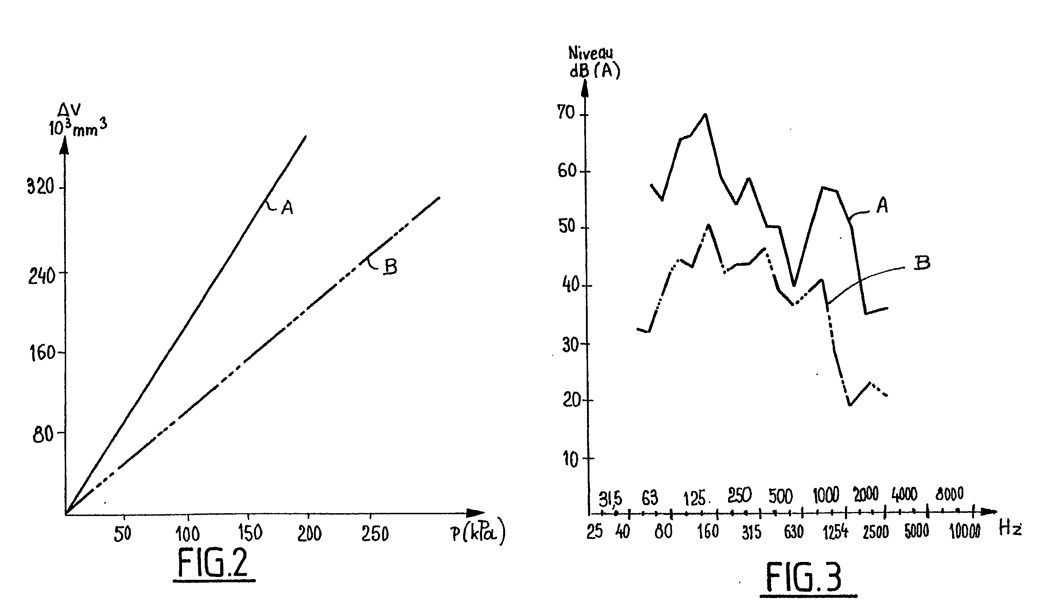

On se reportera à la Fig.2 : on y a indiqué les variations des volumes en fonction de la pression que l'on fait régner dans la pièce creuse étudiée. Sur le graphique on a tracé le cas de deux pièces identiques faites l'une (A) en polyuréthane et l'autre (B) en une résine chargée de fibres de verre. En se reportant à la Fig.3, on a représenté les courbes des réponses acoustiques obtenues par les techniques normalisées pour les deux mêmes pièces. On constate que les deux pièces que l'on a utilisées précédemment se classent de la même manière, c'est-à-dire que celle dont le pouvoir émissif acoustique est le plus important est celle dont les variations de volume en fonction de la pression sont les plus grandes.

Les tracés de graphiques analogues à celui de la Fig. 2 peuvent être obtenus automatiquement en pilotant l'appareil par un microcalculateur programmable, comme il est classique.

On voit donc que grâce à la technique selon l'invention, on peut faire des mesures très faciles et très rapides sur des pièces isolées. Et ceci présente un grand avantage par rapport à la technique traditionnelle des mesures acoustiques globales.

Comme on le sait, les mesures acoustiques traditionnelles ne se font que sur un véhicule terminé sur lequel on place de nombreux capteurs; on fait circuler le véhicule ou on le place dans une chambre sourde. On constate alors les niveaux sonores, mais il est pratiquement impossible d'en déceler l'origine exacte et donc de savoir sur quel composant il est nécessaire d'agir pour que le niveau sonore global satisfasse aux normes imposées par les pouvoirs publics. Grâce à l'invention, il est donc possible d'examiner un par un les divers constituants et de faire en sorte que chacun se voit donner la configuration qui correspond à la variation de volume minimale en fonction de la pression.

On peut parvenir à ce résultat par exemple en jouant sur l'épaisseur des parois, en disposant des nervures ou en adaptant le profil longitudinal des pièces pour choisir les rayons appropriés de courbure des coudes et les sections. En effet, les réponses acoustiques des pièces varient avec le régime du moteur qui fixe la vitesse et le débit de circulation de l'air dans les conduites d'admission. Lorsque toutes ces pièces sont réunies, elles possèdent des fréquences de résonnance et des impédances acoustiques propres qu'il est important de connaître de manière à ce que ces fréquences de résonnances propres ne soient pas excitées lors de la circulation du fluide car c'est à ce moment que le niveau sonore émis est le plus important.

On voit donc que grâce à l'invention, on a établi un corrélation entre la réponse à la déformation et le pouvoir émissif sonore et que l'on peut grâce à une technique relativement simple et rapide établir un classement qui fixe l'importance des niveaux sonores auxquels on peut réellement s'attendre lorsque la pièce étudiée est effectivement utilisée sur un véhicule. On peut donc modifier le composant en cours d'essais au moment de sa conception.

L'invention a été décrite dans son application à des composants particuliers de l'industrie automobile mais il est clair qu'elle n'est pas limitée à ce secteur technique et que nombreux sont les autres domaines où on peut la mettre en oeuvre.

## Revendications

1. Procédé pour l'évaluation du pouvoir émissif acoustique de pièces creuses dont l'enveloppe délimite une cavité débouchant sur l'extérieur par au moins un orifice caractérisé en ce qu'on rend étanche s'il y lieu la pièce creuse, on relie cet orifice de la pièce creuse à une source de fluide, on immerge la pièce ainsi reliée dans un volume déterminé d'un liquide incompréssible, en emplit la cavité de la pièce creuse de ce fluide, on met sous pression le fluide dans la cavité, on mesure la variation du volume du liquide résultant des déformations de l'enveloppe de la pièce engendrées par la pression établie du fluide y régnant.

2. Procédé conforme à la revendication 1, caractérisé en ce qu'on fait dégazer le liquide.

3. Procédé conforme à la revendication 1 ou 2, caractérisé en ce que le liquide est de l'eau.

4. Procédé conforme à l'une quelconque des revendications 1 à 3, caractérisé en ce que le fluide est de l'air.

5. Procédé conforme à l'une quelconque des revendications 1 à 4, caractérisé en ce qu'on mesure la variation du volume à l'aide du déplacement du niveau d'une colonne de liquide.

6. Appareil pour l'évaluation du pouvoir émissif acoustique de pièces creuses dont l'enveloppe délimite un cavité débouchant sur l'extérieur par au moins un orifice, notamment pour la mise en oeuvre du procédé conforme à l'une des revendications 1 à 5, caractérisé en ce qu'il comprend une cuve (10) pratiquement indéformable et de volume déterminé étanche au liquide, une alimentation (30) en fluide sous pression équipée d'un raccord (31) adapté pour être relié à cet orifice de la pièce (50) débouchant dans sa cavité, une distribution de liquide (20) pour emplir et vider la cuve, un capteur (40) de variation du volume du liquide dans la cuve résultant des déformations de l'enveloppe de la pièce engendrées par la pression établie du fluide y régnant.

7. Appareil conforme à la revendication 6, caractérisé en ce que la cuve présente au moins une paroi latérale transparente.

8. Appareil conforme à la revendication 6 ou 7, caractérisé en ce que la cuve (10) est coiffée d'un couvercle (11) fixé de manière étanche sur la cuve.

9. Appareil selon l'une quelconque des revendications 6 à 8, caractérisé en ce que le couvercle (11) présente un sommet et ce que le capteur (40) est fixé au sommet.

10. Appareil conformé à l'une quelconque des revendications 6 à 9, caractérisé en ce que ce capteur (40) est un manomètre à colonne de liquide.

11. Appareil conformé à l'une quelconque des revendications 6 à 10, caractérisé en ce que le liquide est de l'eau dégazée.

12. Appareil conformé à l'une quelconque des revendications 6 à 11, caractérisé en ce que le fluide sous pression est de l'air.

13. Appareil conformé à l'une quelconque des revendications 6 à 12, caractérisé en ce que l'alimentation en fluide (30) comprend un régulateur (32) de débit pour faire varier par palier la pression que l'on fait régner dans la cavité de la pièce creuse (50).

14. Application du procédé et/ou de l'appareil à la mesure du pouvoir émissif acoustique de pièces de l'industrie automobile notamment de la ligne d'admission d'un véhicule.

## Patentansprüche

1. Verfahren zur Bewertung des akustischen Emissionsvermögens hohler Körper, deren Hülle eine Höhlung begrenzt, die nach außen hin über zumindest eine Öffnung geöffnet ist, dadurch gekennzeichnet, daß man den hohlen Körper gegebenenfalls luftdicht macht, man die Öffnung des hohlen Körpers an eine Fluidquelle anschließt, man den somit verbundenen Körper in ein vorbestimmtes Volumen einer inkompressiblen Flüssigkeit versenkt, man die Höhlung des hohlen Körpers mit dem Fluid füllt, man das Fluid in der Höhlung unter Druck setzt, man die sich aus den durch den hier herrschenden eingestellten Druck des Fluids erzeugten Verformungen der Hülle des Körpers ergebende Änderung des Volumens der Flüssigkeit mißt.

2. Verfahren nach dem Anspruch 1, dadurch gekennzeichnet, daß man die Flüssigkeit entgast.

3. Verfahren nach dem Anspruch 1 oder 2, dadurch gekennzeichnet, daß die Flüssigkeit Wasser ist.

4. Verfahren nach einem der Ansprüche 1 bis 3, dadurch gekennzeichnet, daß das Fluid Luft ist.

5. Verfahren nach einem der Ansprüche 1 bis 4, dadurch gekennzeichnet, daß man die Volumenänderung mit Hilfe der Verschiebung der Höhe einer Flüssigkeitssäule mißt.

6. Vorrichtung zur Bewertung des akustischen Emissionsvermögens hohler Körper, deren Hülle eine Höhlung begrenzt, die mit zumindest einer Öffnung nach außen hin geöffnet ist, insbesondere zur Durchführung des Verfahrens entsprechend einem der Ansprüche 1 bis 5, dadurch gekennzeichnet, daß sie einen Behälter (10) aufweist, der so gut wie unverformbar ist und ein bestimmtes Volumen, das gegen die Flüssigkeit abgedichtet ist, eine Versorgung (30) mit unter Druck stehendem Fluid, die mit einem Verbindungsstück (31) ausgestattet ist, das zum Anschluß an die Öffnung des Körpers (50) vorgesehen ist, die in dessen Höhlung mündet, eine Flüssigkeitsverteilung (20) zum Füllen und Leeren des Behälters, und einen Aufnehmer (40) für die Volumenänderung der Flüssigkeit in dem Behälter aufweist, die aus den Deformationen der Hülle des Körpers resultiert, die durch den hier herrschenden eingestellten Druck des Fluids verursacht werden.

7. Vorrichtung nach dem Anspruch 6, dadurch gekennzeichnet, daß der Behälter zumindest eine transparente Seitenwand aufweist.

8. Vorrichtung nach dem Anspruch 6 oder 7, dadurch gekennzeichnet, daß der Behälter (10) mit einem Deckel (11) abgedeckt ist, der luftdicht auf dem Behälter befestigt ist.

9. Vorrichtung nach einem der Ansprüche 6 bis 8, dadurch gekennzeichnet, daß der Deckel (11) eine Spitze aufweist und daß der Aufnehmer (40) an der Spitze befestigt ist.

10. Vorrichtung nach einem der Ansprüche 6 bis 9, dadurch gekennzeichnet, daß der Aufnehmer 40 ein Manometer mit einer Flüssigkeitssäule ist.

11. Vorrichtung nach einem der Ansprüche 6 bis 10, dadurch gekennzeichnet, daß die Flüssigkeit entgastes Wasser ist.

12. Vorrichtung nach einem der Ansprüche 6 bis 11, dadurch gekennzeichnet, daß das unter Druck stehende Fluid Luft ist.

13. Vorrichtung nach einem der Ansprüche 6 bis 12, dadurch gekennzeichnet, daß die Fluidversorgung (30) einen Durchsatzregulierer (32) aufweist, um den Druck, den man in der Höhlung des hohlen Körpers (50) herrschen läßt, stufenweise verändern zu können.

14. Anwendung des Verfahrens und/oder der Vorrichtung zur Messung des akustischen Emissionsvermögens von Körpern in der Automobilindustrie, insbesondere in der Einlaßleitung eines Fahrzeugs.

## Claims

1. Method for evaluating the sound emission capacity of hollow components, the casing of which delimits a cavity opening to the outside via at least one orifice, characterized in that the hollow component is sealed, if appropriate, this orifice in the hollow component is connected to a fluid source, the thus component connected is submerged in a given volume of an incompressible liquid, the cavity of the hollow component is filled with said fluid, the fluid in the cavity is pressurized and measurement takes place of the variation in volume of the liquid resulting from the deformations of the component casing which are caused by the pressure of the fluid in it.

2. Method according to claim 1, characterized in that the liquid is degassed.

3. Method according to claim 1 or 2, characterized in that the liquid is water.

4. Method according to any one of claims 1 to 3, characterized in that the fluid is air.

5. Method according to any one of claims 1 to 4, characterized in that the variation in volume is measured with the aid of the movement of the level of a head of liquid.

6. Equipment for evaluating the sound emission capacity of hollow components, the casing of which delimits a cavity opening to the outside via at least one orifice, particularly for performing the method according to one of claims 1 to 5, characterized in that it comprises a substantially nondeformable liquid-tight tank (10) of given volume, a pressurized fluid supply (30) equipped with a connector (31) to be connected to this orifice in the component (50) opening into its cavity, a liquid delivery (20) for filling and emptying the tank, and a sensor (40) for detecting the variation in volume of the liquid in the tank resulting from the deformations of the component casing which are caused by the pressure of the fluid in it.

7. Equipment according to claim 6, characterized in that the tank has at least one transparent side wall.

8. Equipment according to claim 6 or 7, characterized in that the tank (10) is covered by a cover (11) tightly fixed to the tank.

9. Equipment according to any one of claims 6 to 8, characterized in that the cover (11) has an apex, and in that the sensor (40) is fastened to the apex.

10. Equipment according to any one of claims 6 to 9, characterized in that this sensor (40) is a liquid-head pressure gauge.

11. Equipment according to any one of claims 6 to 10, characterized in that the liquid is degassed water.

12. Equipment according to any one of claims 6 to 11, characterized in that the pressurized fluid is air.

13. Equipment according to any one of claims 6 to 12, characterized in that the fluid supply (30) incorporates a flow regulator (32) for varying in stages the pressure which is made to prevail in the cavity of the hollow component (50).

14. Use of the method and/or the equipment for measuring the sound emission capacity of components in the motor vehicle industry, particularly the intake line of a vehicle.

FIG.1

FIG.2

FIG.3

EP 0 274 300 B1